# EUROPÄISCHE PATENTSCHRIFT

(11) **EP 3 710 792 B1**
(45) Veröffentlichungstag und Bekanntmachung des Hinweises auf die Patenterteilung: **24.01.2024**
(21) Anmeldenummer: 18795577.8
(22) Anmeldetag: 30.10.2018
(51) Int. Cl.: G01F 1/84, G01F 1/74

(54) **MESSGERÄT MIT MINDESTENS EINEM GEBOGENEN MESSROHR ZUM ERMITTELN EINES MASSEDURCHFLUSSMESSWERTS EINES MEDIUMS NACH DEM CORIOLIS-PRINZIP**
MEASURING DEVICE HAVING AT LEAST ONE BENT MEASURING TUBE FOR DETERMINING A MASS FLOW MEASURED VALUE OF A MEDIUM ACCORDING TO THE CORIOLIS PRINCIPLE
APPAREIL DE MESURE POURVU D'AU MOINS UN TUBE DE MESURE ARQUÉ DESTINÉ À DÉTERMINER UNE VALEUR DE MESURE DE DÉBIT MASSIQUE D'UN FLUIDE SELON LE PRINCIPE DE L'EFFET CORIOLIS

(30) Priorität: 14.11.2017 DE 102017126733
(43) Veröffentlichungstag der Anmeldung: 23.09.2020
(73) Patentinhaber: Endress+Hauser Flowtec AG, 4153 Reinach (CH)
(72) Erfinder: ZHU, Hao, 85354 Freising (DE); RIEDER, Alfred, 84032 Landshut (DE)
(74) Vertreter: Hahn, Christian
(86) Internationale Anmeldenummer: PCT/EP2018/079632
(87) Internationale Veröffentlichungsnummer: WO 2019/096575

(56) Entgegenhaltungen:
- DE-A1-102008 023 056
- DE-A1-102008 023 056
- US-A1- 2006 169 058
- US-A1- 2006 169 058
- US-A1- 2010 170 322
- US-A1- 2011 167 907
- US-A1- 2013 133 436
- US-A1- 2013 133 436

## Beschreibung

Die vorliegende Erfindung betrifft ein Messgerät mit mindestens einem gebogenen Messrohr zum Ermitteln eines Massedurchflussmesswerts eines Mediums nach dem Coriolis-Prinzip. Solche Messgeräte sind beispielsweise offenbart in DE 10 2009 046 839 A1, DE 10 2015 109 790 A1, DE 10 2012 018 988 A1, US2010170322 und DE 10 2011 119 980 A1. US 2013/0133436 A1 offenbart dagegen ein Coriolis-Massedurchflussmessgerät mit zwei parallel verlaufenden geraden Messrohren, die zur Ermittlung der Viskosität auch zu Torsionsschwingungen angeregt werden können. Zum Erfassen der Torsionsschwingungen sind einlaufseitig und auslaufseitig jeweils zwei Schwingungssensoren angeordnet. Gattungsgemäße Messgeräte mit gebogenen Messrohren sind üblich, da sich auf diese Weise bei gegebener Empfindlichkeit des Messgerätes kürzere Baulängen realisieren lassen. Bei mehrphasigen Medien können jedoch in den gebogenen Messrohren Zentrifugalkräfte eine inhomogene Verteilung der Phasen bewirken, wenn diese unterschiedliche Dichten aufweisen. Im Ergebnis kann dies im Messrohr zu Zonen unterschiedlicher Massedurchflussraten führen. Je nach Grad der Inhomogenität, können damit bei gattungsgemäßen Messgeräten Messfehler auftreten. Es ist daher die Aufgabe der vorliegenden Erfindung, hier Abhilfe zu schaffen.

Die Aufgabe wird gelöst durch das Messgerät gemäß dem unabhängigen Patentanspruch 1.

Das erfindungsgemäße Messgerät zum Messen des Massedurchflussmesswerts eines Mediums nach dem Coriolis-Prinzip umfasst:
einen Messaufnehmer; und
eine Betriebs- und Auswerteschaltung;
wobei der Messaufnehmer umfasst:
   mindestens ein Paar von im Wesentlichen baugleichen, schwingfähigen Messrohren zum Führen des Mediums, die parallel zueinander angeordnet sind, um gegeneinander zu schwingen,
   wobei die Messrohre in ihrer Ruhelage gebogen sind, wobei die Messrohre im wesentlichen spiegelsymmetrisch zu einer Messrohrquerebene verlaufen, die die Messrohre senkrecht schneiden, wobei jeweils eine Messrohrmittenlinie in einer Messrohrlängsebene verläuft, welche senkrecht zur Messrohrquerebene ausgerichtet ist, wobei eine Messrohräquatorialfläche senkrecht zur Messrohrlängsebene entlang der Messrohrmittenlinie verläuft;
      mindestens einen Erreger, wobei der Erreger angeordnet ist, um Biegeschwingungen der Messrohre des Paars von Messrohren gegeneinander anzuregen;
      mindestens ein erstes Paar von Schwingungssensoren, wobei die Schwingungssensoren angeordnet sind, um Biegeschwingungen der Messrohre des Paars von Messrohren gegeneinander zu erfassen, wobei das erste Paar von Schwingungssensoren spiegelsymmetrisch zur Messrohrquerebene angeordnet ist; und
   wobei die Betriebs- und Auswerteschaltung eingerichtet ist zum Treiben des Erregers zum Erfassen von Signalen der Schwingungssensoren, und zum Ermitteln eines Massedurchflussmesswerts eines das Messrohr durchströmenden Mediums; wobei das Messgerät ein zweites Paar von Schwingungssensoren zum Erfassen der Biegeschwingungen aufweist, die spiegelsymmetrisch zur Messrohrquerebene angeordnet sind, wobei das erste Paar von Schwingungssensoren vom zweiten Paar von Schwingungssensoren durch die Messrohräquatorialfläche getrennt ist, und die Betriebs- und Auswerteschaltung dazu eingerichtet ist, in Abhängigkeit einer Abweichung zwischen Signalen des ersten Paars von Sensoren und des zweiten Paars von Sensoren ein mehrphasiges Medium festzustellen.

In einer Weiterbildung der Erfindung beträgt der Abstand eines Schwingungssensors des ersten Schwingungssensorpaars zum nächstliegenden Schwingungssensor des zweiten Schwingungssensorpaars mindestens 0,5 Durchmesser beispielsweise mindestens 0,8 Durchmesser der Messrohre, insbesondere mindestens einen Durchmesser der Messrohre.

In einer Weiterbildung der Erfindung weisen die Messrohre des Paars von Messrohren eine gemeinsame Messrohräquatorialfläche auf, wobei der Abstand der Schwingungssensoren des ersten Schwingungssensorpaars zur Messrohräquatorialfläche mindestens 0,3 Durchmesser der Messrohre, insbesondere mindestens 0,45 Durchmesser der Messrohre beträgt.

In einer Weiterbildung der Erfindung, beträgt der Abstand der Schwingungssensoren des zweiten Schwingungssensorpaars zur Messrohräquatorialfläche mindestens 0,3 Durchmesser der Messrohre, insbesondere mindestens 0,45 Durchmesser der Messrohre.

In einer Weiterbildung der Erfindung umfasst das mehrphasige Medium eine mit Gas beladene Flüssigkeit.

In einer Weiterbildung der Erfindung ist die Betriebs- und Auswerteschaltung dazu eingerichtet, in Abhängigkeit der Signale des ersten Paars von Schwingungssensoren und des zweiten Paars von Schwingungssensoren jeweils einen Massedurchflussmesswert zu bestimmen.

In einer Weiterbildung der Erfindung ist die Betriebs- und Auswerteschaltung dazu eingerichtet, in Abhängigkeit einer Abweichung zwischen den Massedurchflussmesswerten des ersten und des zweiten Paars von Sensoren ein mehrphasiges Medium, insbesondere eine mit Gas beladene Flüssigkeit festzustellen.

In einer Weiterbildung der Erfindung ist die Betriebs- und Auswerteschaltung dazu eingerichtet, in Abhängigkeit der beiden Massedurchflussmesswerte des ersten und des zweiten Paars von Sensoren einen mittleren Massedurchflussmesswert für das Messgerät zu bestimmen.

In einer Weiterbildung der Erfindung weist der Messaufnehmer mindestens ein Paar von im Wesentlichen baugleichen Messrohren auf, die parallel zueinander angeordnet sind, um gegeneinander zu schwingen, wobei der Erreger angeordnet ist, um Schwingungen der Messrohre des Paars von Messrohren gegeneinander anzuregen und die Schwingungssensoren angeordnet sind, um Schwingungen der Messrohre des Paars von Messrohren gegeneinander zu erfassen.

Die Erfindung wird nun anhand eines in den Zeichnungen dargestellten Ausführungsbeispiels näher erläutert. Es zeigt:
Fig. 1a: Eine räumliche Darstellung eines Messaufnehmers eines Ausführungsbeispiels eines erfindungsgemäßen Messgerätes;
Fig. 1b: Eine schematische Darstellung der Beschaltung des Erregers und der Schwingungssensoren;
Fig. 2a: Eine räumliche Darstellung von Koordinaten zur Beschreibung des Messaufnehmers;
Fig. 2b: Einen Querschnitt durch die Messrohre eines Messaufnehmers eines Erfindungsgemäßen Messgerätes; und
Fig. 3: Ein Diagramm zu Abweichungen zwischen Massedurchflussmesswerten auf Basis von Sensorsignalen des ersten Paars von Schwingungssensoren und Massedurchflussmesswerten auf Basis des zweiten Paars von Schwingungssensoren als Funktion einer Gasbeladung des Mediums.

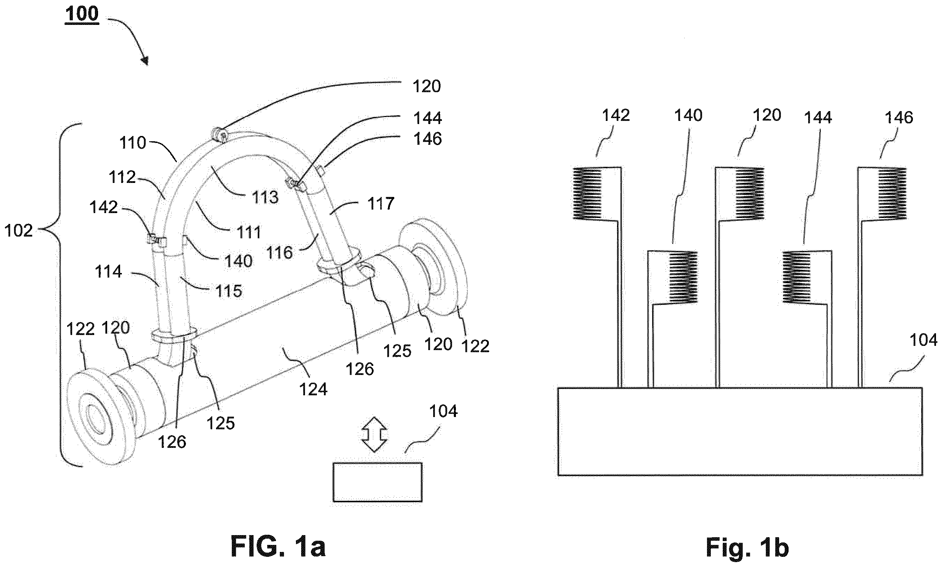

Das in Fig 1a dargestellte Ausführungsbeispiel eines erfindungsgemäßen Massedurchflussmessgerätes 100 umfasst Messaufnehmer 102 und eine Betriebs- und Auswerteschaltung 104. Der Messaufnehmer 102 umfasst ein Paar von in der Ruhelage gebogenen, parallel geführten, schwingfähigen Messrohren 110, 112, die zwischen einlaufseitigen und auslaufseitigen Strömungsteilern 120 erstrecken. Die Strömungsteiler 120 weisen jeweils einen Flansch 122 auf, mit denen der Messaufnehmer 102 in eine Rohrleitung einbaubar ist, um ein in der Rohrleitung strömendes Medium durch die Messrohre 110, 112 des Messaufnehmers 102 zu führen. Die Sammler 120 sind mit einem im Wesentlichen zylindrischen, steifen Trägerrohr 124 verbunden, welches in seiner Mantelfläche zwei Durchbrüche 125 aufweist, durch welche die Messrohre 110, 112 bogenförmig geführt sind. Im Messbetrieb sind die außerhalb des Trägerrohrs 124 verlaufenden Abschnitte der Messrohre 110, 112 von einem Messrohrgehäuse umschlossen, um diese vor Umgebungseinflüssen zu schützen. Im Sinne der Übersicht ist dieses Messrohrgehäuse hier nicht dargestellt. Die Messrohre 110, 112 sind nahe der Durchbrüche 125 mit Knotenplatten 126, verbunden, durch welche eine freie Schwingungslänge der Messrohre 110, 112 festgelegt ist. Die frei schwingenden Abschnitte der Messrohre umfassen jeweils zwei gerade Abschnitte 114, 116, 115, 117, die jeweils durch einen bogenförmigen Abschnitt 112, 113 miteinander verbunden sind.

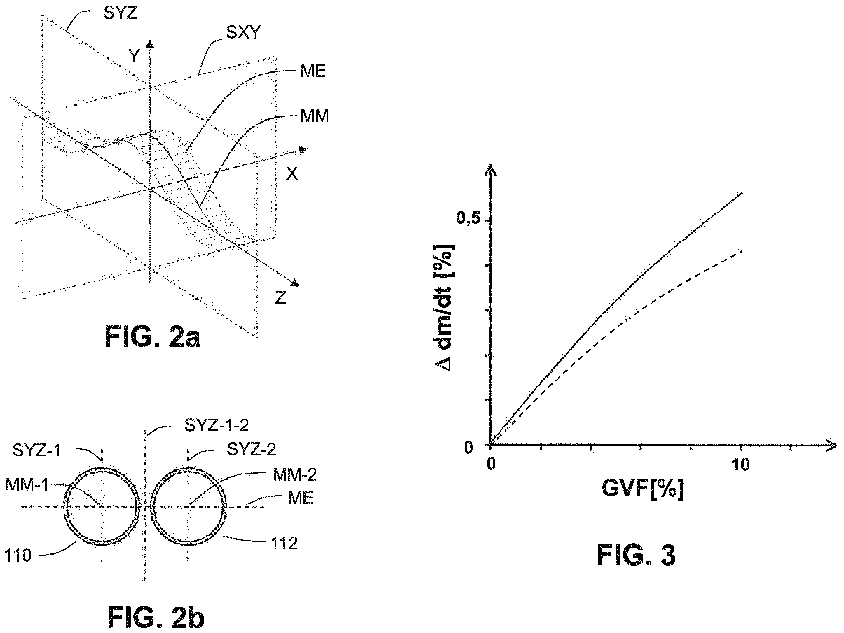

Zur Erläuterung von geometrischen Verhältnissen und Symmetrien des Messaufnehmers 102 wird nun auf Fign. 2a und 2b verwiesen, wobei Fig. 2a die Verhältnisse für eine einzelnes Messrohr in einer räumlichen Darstellung zeigt, und Fig. 2b einen Querschnitt durch ein Messrohrpaar darstellt.

Jedes der Messrohre 110, 112 weist eine Messrohrmittenlinie MM; MM-1, MM-2 auf welche jeweils in einer Messrohrlängsebene SYZ, SYZ-1, SYZ-2 verläuft. Senkrecht zur Y-Z-Ebene verläuft entlang der Messrohrmittenlinie eine Messrohräquatorialfläche ME, die hier beiden Messrohren 110, 112 gemeinsam ist. Die Messrohrmittenlinien MM, MM-1, MM-2 verlaufen spiegelsymmetrisch zu einer Messrohrquerebene SXY, die senkrecht auf den Messrohrlängsebenen SYZ, SYZ-1, SYZ-2 steht, und welche die Messrohrmittenlinien im Scheitelpunkt der bogenförmigen Abschnitte der Messrohre schneidet. Zwischen den Messrohrlängsebenen SYZ-1, SYZ-2 verläuft eine Messaufnehmerlängsebene SYZ-1-2, zu welcher erstere spiegelsymmetrisch sind.

Die Schnittlinie zwischen der Messaufnehmerlängsebene SYZ-1-2 und der Messrohrquerebene SXY definiert eine Y-Achse eines Koordinatensystems, in dem eine Z-Achse in Längsrichtung des Messaufnehmers 102 definiert ist, die senkrecht zur Messrohrquerebene SXY verläuft. Die Anregung von Biegeschwingungen erfolgt in X-Richtung.

Wie in Fig. 1a dargestellt, weist der Messaufnehmer 102 einen eletrodynamischen Erreger 120 auf, der in der Mitte des Messrohrbogens, durch welche die Messrohrquerebene verläuft, angeordnet ist um eine symmetrische Biegeschwingungsnutzmode der Messrohre 110, 112 gegeneinander in X-Richtung anzuregen. In diesem Ausführungsbeispiel ist der Erreger an der Außenseite 120 des Messrohrbogens angeordnet, da auf diese Weise ein höherer Wirkungsgrad erzielt werden kann. Grundsätzlich kann der Erreger auch an der Innenseite des Messrohrbogens angeordnet sein, wobei er ebenfalls symmetrisch zur Messrohrquerebene zu positionieren ist.

Der Messaufnehmer 102 umfasst weiterhin ein erstes Paar von elektrodynamischen Schwingungssensoren 140, 144 die symmetrisch zur Messrohrquerebene an der Innenseite des Messrohrbogens angeordnet sind, sowie ein zweites Paar von elektrodynamischen Schwingungssensoren 142, 146 die symmetrisch zur Messrohrquerebene an der Außenseite des Messrohrbogens angeordnet sind.

Der elektrodynamische Erreger 120 sowie die Schwingungssensoren 140, 142, 144, 146 weisen Erreger- bzw. Sensorspulen auf, die alle unabhängig voneinander an eine Betriebs- und Auswerteschaltung 104 angeschlossen sind, wie in Fig. 1b schematisch dargestellt ist. Die Verbindungsleitungen zwischen dem Erreger 120 bzw. den Schwingungssensoren 140, 142, 144, 146 und der Betriebs- und Auswerteschaltung sind im Sinne der Übersichtlichkeit in Fig. 1a nicht dargestellt.

Die Betriebs- und Auswerteschaltung 104 ist dazu eingerichtet, den Erreger 120 mit einem Erregerstromsignal zu treiben, dessen Frequenz einer aktuellen Nutzmodeeigenfrequenz einer Biegeschwingungsnutzmode entspricht, sowie die Sensorsignale der Schwingungssensoren 140, 142, 144, 146 zu erfassen. Die Betriebs- und Auswerteschaltung 104 ist weiterhin dazu eingerichtet, aus einer ersten Phasendifferenz zwischen den Sensorsignalen des ersten Paars von Schwingungssensoren 140, 144 einen ersten Massedurchflussmesswert und aus einer zweiten Phasendifferenz zwischen den Sensorsignalen des zweiten Paars von Schwingungssensoren 142, 146 einen zweiten Massedurchflussmesswert zu bestimmen.

Für homogene Medien unterscheiden sich die beiden Massedurchflussmesswerte praktisch nicht voneinander. Wenn dagegen ein inhomogenes Medium durch die Messrohre strömt, beispielsweise eine mit Gas beladene Flüssigkeit, können die beiden Massedurchflussmesswerte voneinander divergieren, insbesondere bei höheren Massedurchflussraten, wie im Folgenden erläutert wird. Im Messrohrbogen können Zentripetalbeschleunigungen von einigen 100 m/s² auftreten, so dass die Phasen des Mediums nach Durchlaufen des Messrohrbogens zu einem gewissen Grad inhomogen verteilt sind. D.h., die schwerere, flüssige Phase des Mediums wird an der Außenseite des Messrohrbogens angereichert, während die leichtere, gasförmige Phase zur Innenseite des Rohrbogens verdrängt wird. Die Außenseite des Messrohrbogens ist also von einem größeren Massedurchfluss beeinflusst als die Innenseite des Messrohrbogens. Die führt zu signifikanten Abweichungen zwischen dem ersten Massedurchflussmesswert und dem zweiten Massedurchflussmesswert.

Ein entsprechender experimenteller Befund ist in Fig. 3 dargestellt. Das Diagramm zeigt die relative Abweichung des zweiten Massedurchflussmesswerts vom ersten Massedurchflussmesswert bei Massedurchflussraten von 10000 kg/h (durchgezogene Linie) und 5000 kg/h (gestrichelte Linie) in Abhängigkeit von der Gasbeladung.

Durch Hinterlegen von entsprechenden Referenzdaten welche die Messwertabweichung als Funktion von Gasbeladung und Massedurchflussrate charakterisieren, kann die Betriebs und Auswerteschaltung ertüchtigt werden, bei gegebenen ersten und zweiten Massedurchflussmesswerten anhand von deren Abweichung zueinander einerseits eine Gasbeladung eines den Messaufnehmer durchströmenden Mediums zu ermitteln und ggf. auszugeben und andererseits einen korrigierten Massedurchflussmesswert zu ermitteln und ggf. auszugeben.

## Patentansprüche

1. Messgerät (100) zum Ermitteln eines Massedurchflussmesswerts eines Mediums nach dem Coriolis-Prinzip, umfassend:
einen Messaufnehmer (102); und
eine Betriebs- und Auswerteschaltung (104);
wobei der Messaufnehmer umfasst:
mindestens ein Paar von im Wesentlichen baugleichen, schwingfähigen Messrohren (110, 112) zum Führen des Mediums, die parallel zueinander angeordnet sind, um gegeneinander zu schwingen,
wobei die Messrohre (110, 112) in ihrer Ruhelage gebogen sind, wobei die Messrohre (110, 112) im wesentlichen spiegelsymmetrisch zu einer Messrohrquerebene (SXY) verlaufen, die die Messrohre senkrecht schneiden, wobei jeweils eine Messrohrmittenlinie (MM-1, MM-2) in einer Messrohrlängsebene (SYZ-1, SYZ-2) verläuft, welche senkrecht zur Messrohrquerebene (SXY) ausgerichtet ist, wobei eine Messrohräquatorialfläche (ME) senkrecht zur Messrohrlängsebene (SYZ-1, SYZ-2) entlang der Messrohrmittenlinie (MM-1, MM-2) verläuft;
mindestens einen Erreger (120), wobei der Erreger (120) angeordnet ist, um Biegeschwingungen der Messrohre (110, 112) des Paars von Messrohren gegeneinander anzuregen;
mindestens ein erstes Paar (140, 144) von Schwingungssensoren, wobei die Schwingungssensoren (140, 142, 144, 146) angeordnet sind, um Biegeschwingungen der Messrohre (110, 112) des Paars von Messrohren gegeneinander zu erfassen, wobei das erste Paar von Schwingungssensoren spiegelsymmetrisch zur Messrohrquerebene (SXY) angeordnet ist; und
wobei die Betriebs- und Auswerteschaltung (104) eingerichtet ist zum Treiben des Erregers (120), zum Erfassen von Signalen der Schwingungssensoren (140, 144), und zum Ermitteln eines Massedurchflussmesswerts eines das Paar von Messrohren durchströmenden Mediums;
**dadurch gekennzeichnet, dass**
das Messgerät ein zweites Paar von Schwingungssensoren (142, 146) zum Erfassen der Biegeschwingungen aufweist, die spiegelsymmetrisch zur Messrohrquerebene (SXY) angeordnet sind, wobei das erste Paar von Schwingungssensoren (140, 144) vom zweiten Paar von Schwingungssensoren (142, 146) durch die Messrohräquatorialfläche (ME) getrennt ist, und
die Betriebs- und Auswerteschaltung dazu eingerichtet ist, in Abhängigkeit einer Abweichung zwischen Signalen des ersten Paars von Sensoren und des zweiten Paars von Sensoren ein mehrphasiges Medium festzustellen.

2. Messgerät nach Anspruch 1, wobei der Abstand eines Schwingungssensors des ersten Schwingungssensorpaars zum nächstliegenden Schwingungssensor des zweiten Schwingungssensorpaars mindestens 0,5 Durchmesser beispielsweise mindestens 0,8 Durchmesser der Messrohre, insbesondere mindestens einen Durchmesser der Messrohre beträgt.

3. Messgerät nach Anspruch 1 oder 2, wobei die Messrohre des Paars von Messrohren (110, 112) eine gemeinsame Messrohräquatorialfläche (ME) aufweisen, wobei der Abstand der Schwingungssensoren des ersten Schwingungssensorpaars zur Messrohräquatorialfläche mindestens 0,3 Durchmesser der Messrohre, insbesondere mindestens 0,45 Durchmesser des Messrohre beträgt, und/oder wobei der Abstand der Schwingungssensoren des zweiten Schwingungssensorpaars zur Messrohräquatorialfläche mindestens 0,3 Durchmesser der Messrohre, insbesondere mindestens 0,45 Durchmesser der Messrohre beträgt.

4. Messgerät nach einem der vorhergehenden Ansprüche, wobei das mehrphasige Medium eine mit Gas beladene Flüssigkeit umfasst.

5. Messgerät nach einem der vorhergehenden Ansprüche, wobei die Betriebs--- und Auswerteschaltung dazu eingerichtet ist, in Abhängigkeit der Signale des ersten Paars von Schwingungssensoren und des zweiten Paars von Schwingungssensoren jeweils einen Massedurchflussmesswert zu bestimmen.

6. Messgerät nach Anspruch 5, wobei die Betriebs- und Auswerteschaltung dazu eingerichtet ist, in Abhängigkeit einer Abweichung zwischen den Massedurchflussmesswerten des ersten und des zweiten Paars von Sensoren ein mehrphasiges Medium, insbesondere eine mit Gas beladene Flüssigkeit festzustellen.

7. Messgerät nach Anspruch 5 oder 6, wobei die Betriebs- und Auswerteschaltung dazu eingerichtet ist, in Abhängigkeit der beiden Massedurchflussmesswerte des ersten und des zweiten Paars von Sensoren einen mittleren Massedurchflussmesswert für das Messgerät zu bestimmen.

## Claims

1. Measuring device (100) for determining a mass flow measured value of a medium according to the coriolis principle, comprising:
a measuring sensor (102); and
an operating and evaluation circuit (104);
wherein the measuring sensor encompasses:
at least one pair of essentially identical resonant measuring tubes (110, 112) for carrying the medium which are arranged parallel to one another in order to vibrate against one another,
wherein the measuring tubes (110, 112) are curved in their resting position, wherein the measuring tubes (110, 112) essentially run symmetrically identically relative to a transverse measuring tube plane (SXY) that crosses the measuring tubes vertically,
wherein in each case one measuring tube center line (MM-1, MM-2) runs in a longitudinal measuring tube plane (SYZ-1, SYZ-2) that is aligned vertically to the transverse measuring tube plane (SXY), wherein an equatorial measuring tube surface (ME) runs vertically relative to the longitudinal measuring tube plane (SYZ-1, SYZ-2) along the measuring tube center line (MM-1, MM-2);
at least one exciter (120), wherein the exciter (120) is arranged in such a way as to excite bending vibrations in the pair of measuring tubes (110, 112) against one another;
at least one first pair (140, 144) of vibration sensors, wherein the vibration sensors (140, 142, 144, 146) are arranged in such a way as to record bending vibrations in the pair of measuring tubes (110, 112) against one another, wherein the first pair of vibration sensors is arranged symmetrically identically to the transverse measuring tube plane (SXY); and
wherein the operating and evaluation circuit (104) is configured to operate the exciter (120), to record signals of the vibration sensors (140, 144), and to determine a mass flow measured value of a pair of measuring tubes with medium flowing through them;
**characterized in that**
the measuring device exhibits a second pair of vibration sensors (142, 146) for recording the bending vibrations that are arranged symmetrically identically relative to the transverse measuring tube plane (SXY), wherein the first pair of vibration sensors (140, 144) is separated from the second pair of vibration sensors (142, 146) by the equatorial measuring tube surface (ME), and
the operating and evaluation circuit is configured to identify a multi-phase medium on the basis of a variance between signals from the first pair of sensors and from the second pair of sensors.

2. Measuring device according to claim 1, wherein the distance of a vibration sensor of the first pair of vibration sensors to the nearest vibration sensor of the second pair of vibration sensors is at least 0.5x the diameter, for example at least 0.8x the diameter, in particular at least one full diameter of the measuring tubes.

3. Measuring device according to claim 1 or 2, wherein the measuring tubes of the pair of measuring tubes (110, 112) exhibit a common equatorial measuring tube surface (ME), wherein the distance of the vibration sensors of the first pair of vibration sensors to the equatorial measuring tube surface is at least 0.3x the diameter of the measuring tubes, in particular at least 0.45x the diameter of the measuring tube, and/or wherein the distance of the vibration sensors of the second pair of vibration sensors to the equatorial measuring tube surface is at least 0.3x the diameter of the measuring tubes, in particular at least 0.45x the diameter of the measuring tubes.

4. Measuring device according to one of the preceding claims, wherein the multi-phase medium comprises a gas-charged liquid.

5. Measuring device according to one of the preceding claims, wherein the operating and evaluation circuit is configured to determine one mass flow measured value on the basis of the signals of the first pair of vibration sensors and the second pair of vibration sensors.

6. Measuring device according to claim 5, wherein the operating and evaluation circuit is configured to identify a multi-phase medium, in particular a gas-charged liquid, on the basis of a variance between the mass flow measured values of the first and of the second pair of sensors.

7. Measuring device according to claim 5 or 6, wherein the operating and evaluation circuit is configured to determine an average mass flow measured value for the measuring device on the basis of the two mass flow measured values of the first and the second pair of sensors.

## Revendications

1. Appareil de mesure (100) destiné à la détermination d'une valeur mesurée de débit massique d'un produit selon le principe de Coriolis, lequel appareil comprend:
un capteur de mesure (102) ; et
un circuit d'exploitation et d'évaluation (104) ;
le capteur de mesure comprenant :
au moins une paire de tubes de mesure (110, 112) pour l'essentiel de conception identique, lesquels tubes sont aptes à vibrer, destinés à guider le produit et disposés parallèlement l'un à l'autre de manière à vibrer l'un par rapport à l'autre,
les tubes de mesure (110, 112) étant courbés dans leur position de repos, les tubes de mesure (110, 112) s'étendant pour l'essentiel symétriquement par rapport à un plan transversal de tube de mesure (SXY) que les tubes de mesure coupent perpendiculairement, une ligne médiane de tube de mesure (MM-1, MM-2) s'étendant dans un plan longitudinal de tube de mesure (SYZ-1, SYZ-2), lequel plan est orienté perpendiculairement au plan transversal de tube de mesure (SXY), une surface équatoriale de tube de mesure (ME) s'étendant perpendiculairement au plan longitudinal de tube de mesure (SYZ-1, SYZ-2) le long de la ligne médiane de tube de mesure (MM-1, MM-2) ;
au moins un excitateur (120), l'excitateur (120) étant conçu pour exciter des vibrations de flexion des tubes de mesure (110, 112) de la paire de tubes de mesure l'un par rapport à l'autre ;
au moins une première paire (140, 144) de capteurs de vibrations, les capteurs de vibrations (140, 142, 144, 146) étant conçus pour détecter les vibrations de flexion des tubes de mesure (110, 112) de la paire de tubes de mesure l'un par rapport à l'autre, la première paire de capteurs de vibrations étant conçue de manière symétrique par rapport au plan transversal de tube de mesure (SXY) ; et
le circuit d'exploitation et d'évaluation (104) étant conçu pour commander l'excitateur (120), pour détecter les signaux des capteurs de vibrations (140, 144), et pour déterminer une valeur mesurée de débit massique d'un produit s'écoulant à travers la paire de tubes de mesure ;
**caractérisé en ce que**
l'appareil de mesure comprend une deuxième paire de capteurs de vibrations (142, 146) pour détecter les vibrations de flexion, lesquels capteurs sont disposés de manière symétrique par rapport au plan transversal de tube de mesure (SXY), la première paire de capteurs de vibrations (140, 144) étant séparée de la deuxième paire de capteurs de vibrations (142, 146) par la surface équatoriale de tube de mesure (ME), et
le circuit d'exploitation et d'évaluation étant conçu pour détecter un produit multiphasique en fonction d'un écart entre les signaux de la première paire de capteurs et de la deuxième paire de capteurs.

2. Appareil de mesure selon la revendication 1, pour lequel la distance entre un capteur de vibrations de la première paire de capteurs de vibrations et le capteur de vibrations le plus proche de la deuxième paire de capteurs de vibrations est d'au moins 0,5 diamètre, par exemple d'au moins 0,8 diamètre des tubes de mesure, notamment d'au moins un diamètre des tubes de mesure.

3. Appareil de mesure selon la revendication 1 ou 2, pour lequel les tubes de mesure de la paire de tubes de mesure (110, 112) présentent une surface équatoriale de tube de mesure (ME) commune, la distance des capteurs de vibrations de la première paire de capteurs de vibrations à la surface équatoriale de tube de mesure étant d'au moins 0,3 diamètre des tubes de mesure, notamment d'au moins 0,45 diamètre des tubes de mesure, et/ou la distance des capteurs de vibrations de la deuxième paire de capteurs de vibrations à la surface équatoriale de tube de mesure étant d'au moins 0,3 diamètre des tubes de mesure, notamment d'au moins 0,45 diamètre des tubes de mesure.

4. Appareil de mesure selon l'une des revendications précédentes, pour lequel le produit multiphasique comprend un liquide chargé de gaz.

5. Appareil de mesure selon l'une des revendications précédentes, pour lequel le circuit d'exploitation et d'évaluation est conçu pour déterminer une valeur mesurée de débit massique respectivement en fonction des signaux de la première paire de capteurs de vibrations et de la deuxième paire de capteurs de vibrations.

6. Appareil de mesure selon la revendication 5, pour lequel le circuit d'exploitation et d'évaluation est conçu pour détecter un produit multiphasique, notamment un liquide chargé de gaz, en fonction d'un écart entre les valeurs mesurées de débit massique de la première et de la deuxième paire de capteurs.

7. Appareil de mesure selon la revendication 5 ou 6, pour lequel le circuit d'exploitation et d'évaluation est conçu pour déterminer une valeur mesurée moyenne de débit massique pour l'appareil de mesure en fonction des deux valeurs mesurées de débit massique de la première et de la deuxième paire de capteurs.
